# EUROPÄISCHE PATENTSCHRIFT

(11) **EP 0 455 942 B1**
(45) Veröffentlichungstag und Bekanntmachung des Hinweises auf die Patenterteilung: **24.08.1994**
(21) Anmeldenummer: 91102063.4
(22) Anmeldetag: 14.02.1991
(51) Int. Cl.: A01G 13/02

(54) **Verwendung eines photoselektiven Vliesstoffs oder einer ebensolchen Folie zum Bleichen von lebenden Pflanzen**
Utilisation of a photo-selective nonwoven fabric or sheeting for bleaching living plants
Utilisation d'une étoffe non tissé ou d'un film photo-sélectif pour le blanchiment de plantes vives

(30) Priorität: 08.05.1990 DE 4014717
(43) Veröffentlichungstag der Anmeldung: 13.11.1991
(73) Patentinhaber: Firma Carl Freudenberg, 69469 Weinheim (DE)
(72) Erfinder: Seidler, Hans-Peter, Dr., W-6750 Kaiserslautern (DE)

(56) Entgegenhaltungen:
- WO-A-87/00723
- FR-A- 2 342 643
- FR-A- 2 633 302
- FR-A- 2 633 803
- WORLD PATENTS INDEX Week 7911, Derwent PublicationsLtd., London, GB; AN 79-20739B (11) & JP-A-54 015 842 ((MIKA-) MIKADO KAKO KK) 6. Februar 1979

## Beschreibung

Verschiedene Salat- und Gemüsepflanzen, z.B. Frisee, Chicoree, Radiccio, Endivien, Löwenzahn, Sellerie und Spargel, werden vom Verbraucher weniger in ihrer natürlich-grünen, sondern in blaß-gelbgrünen bzw. roten, gebleichten Farbe geschätzt. Neben optischen Aspekten sind für die Bevorzugung der gebleichten Pflanzen auch geschmackliche Gründe maßgeblich. So verfügt z.B. gebleichter Frisee-Salat über weniger Bitterstoffe als ungebleichter.

Die Technologie des Bleichens ist bekannt und z.B. beschrieben in "Fruits et Legumes" No 60 (Januar 1989), S. 42, SARL PUBLICATIONS AGRICOLES, FRANKREICH. Bekannte und gebräuchliche Verfahren zur Erzielung des gewünschten Bleicheffekts verhindern den Lichtzutritt zur Pflanze kurz vor der Vermarktung, wodurch der Bleicheffekt ausgelöst wird. Ein häufiges Verfahren besteht darin, daß man über der Pflanzenkultur schwarze, lichtundurchlässige Vliesstoff- oder Folienbahnen auslegt. Die Abschattung führt zum gewünschten Bleicheffekt. Solche Vliese oder Folien sind rasch auszulegen, da sie in Rollenform gelagert werden können. Auch ist ihre mehrfache Verwendung möglich. Nachteilig sind jedoch häufig auftretende Pflanzenschäden durch Überhitzung, weil die Abdeckungen dunkel bis schwarz eingefärbt sind und daher im Sonnenlicht sich und die Umgebung der Pflanzen sehr stark aufheizen. Insbesondere diejenigen Pflanzenteile, die mit einer Folie direkt in Berührung kommen, können daher verbrennen.

Im Handel sind bereits photoselektive Mulchfolien erhältlich, z.B. mit Masterbatch-Ausrüstungen der Firma Constab, Rüthen, Bundesrepublik Deutschland, die denjenigen Teil der Sonneneinstrahlung absorbieren, der für die Photosynthese notwendig ist, und die den restlichen Anteil, d.h. das grüne Licht und die Wärmestrahlung, durchlassen. Dadurch wird der Unkrautwuchs reduziert, die durchgelassene Strahlung erwärmt den Boden, jedoch ohne Überhitzung desselben. Die Folie wirkt wie ein Herbizid.

Eine Verwendung gemäß dem Oberbegriff des Anspruchs 1 ist aus der FR-A-2 633 803 bekannt.

Aufgabe der vorliegenden Erfindung ist es, ein Verfahren zum Bleichen von lebenden Pflanzen anzugeben, welches die Vorteile der Verwendung einer als Rollenware lieferbaren Folie oder eines solchen Vliesstoffs nützt. Dabei sollen Pflanzenschäden durch Überhitzung vermieden werden.

Die Lösung dieser Aufgabe besteht in der Verwendung eines photoselektiven Vliesstoffs oder einer ebensolchen Folie aus Polyester, Polyethylen oder Polypropylen mit einem Flächengewicht von 20 bis 160 g/m² durch Ausrüsten mit 0,01 g/m² bis 4,0 g/m² TiO₂-Partikeln oder Aluminiumplättchen und mit 0,01 g/m² bis 3,0 g/m² β-Cu-Phtalocyaninblau oder halogeniertem Cu-Phtalocyaningrün, die Selektivwellenlängen von 680 nm und 700 nm absorbieren. Ferner werden besondere Ausgestaltungen einer solchen Folie in den Ansprüchen 2 bis 4 aufgezeigt. Der Oberbegriff der Ansprüche 2 und 3 ist ebenfalls aus der FR-A-2 633 803 bekannt.

Es ist zwar bekannt, daß für die Photosynthese, d.h. den Aufbau von Kohlehydraten in Pflanzen aus Kohlendioxid und Wasser, in Gegenwart von Sonnenlicht und Chlorophyll bestimmte Wellenlängen im Spektrum des natürlichen Sonnenlichts besonders wirksam sind. So werden in Römpp's Chemie-Lexikon, 8. Auflage (1985), Seite 3196, Wellenlängebereiche im roten und blauen Spektralbereich genannt, wobei die höchste Aktivität bei den Absorptionsmaxima der reinen Chlorophyllarten "a" und "b" gefunden wurde. Diese Maxima liegen bei der Wellenlänge 680 nm und bei 700 nm.

Die Erfindung macht sich die selektive Filterung dieser beiden Wellenlängenbereiche zunutze, wobei eine weitgehende Unterdrückung der Photosynthese erfolgt.

Überraschend war, daß ein photoselektiver Vliesstoff oder eine ebensolche Folie nicht nur eine herbizide, also abtötende, Wirkung ausüben kann, sondern daß durch geeignete Auswahl von in der Abdeckung enthaltenen Pigmenten ein Bleichen der lebenden Pflanzen durchgeführt werden kann, ohne diese im Wachstum zu behindern oder durch Überhitzung zu beschädigen.

Weiterhin war nicht vorhersehbar, daß mit einer Absorption der die Photosynthese fördernden Wellenlängen nicht nur die Bildung von Kohlehydraten unterbunden wird, sondern auch die Bildung des grünen Blattfarbstoffs selbst, also eine Bleichwirkung hervorgerufen wird, die voll den Marktanforderungen entspricht.

Damit eröffnet sich die Möglichkeit, die bisherigen, hochabsorbierenden schwarzen Bleichvliese oder -folien durch ebenso wirksame, jedoch in keiner Weise pflanzenschädigende Vliese oder Folien zu ersetzen.

Besonders bevorzugt im Sinne der vorliegenden Erfindung ist es, statt einer Folie einen Faservliesstoff zu verwenden, da die Faserzwischenräume - im Gegensatz zur Folie - mühelos so eingestellt werden können, daß eine optimale Wasser- und Luftdurchlässigkeit gegeben ist. Hingegen ist es selbst mit gelochten Folien schwierig zu verhindern, daß zum Beispiel Regenwasser sich auf der Oberfläche sammelt und somit im ungünstigsten Falle sogar die Lichtabsorptions-Wirkung ungünstig verändert.

Der Rest der verbleibenden Erwärmung läßt sich weiter reduzieren durch Zumischen von lichtreflektierenden Pigmenten oder Zuschlagstoffen, wie Titandioxid oder Aluminiumplättchen. Das Titandioxid sollte dabei eine Korngröße von 0,4 »m aufweisen; die Aluminiumplättchen haben zweckmäßig eine Größe von 5 »m. Derartige Zusätze sind zwar in der Pflanzenfolien-Technologie als temperaturabweisend bekannt, wurden aber bisher nicht in Bleichvliese oder Bleichfolien eingearbeitet, da nur ein Teil der auftreffenden Strahlung reflektiert wird. Der andere Teil der Strahlung wird hauptsächlich durch diffuse Streuung in und durch das Vlies bzw. die Folie hindurchgestreut, so daß die zum Bleichen nötige Abschattung nicht erreicht wurde. Der nicht reflektierte Anteil des Sonnenlichts mußte in einer getrennten, tieferliegenden, schwarzen Absorptionsschicht absorbiert werden, d.h. es wäre eine aufwendige zweilagige Vlies- oder Folienkonstruktion erforderlich.

Das erfindungsgemäße Bleichvlies bzw. die Bleichfolie ist einschichtig aufgebaut; eine besondere Anordnung der zusätzlichen reflektierenden Bestandteile ist nicht mehr erforderlich.

Somit werden ca. 50 % des einfallenden Lichts reflektiert, weswegen die Erwärmung z.B. des Vliesstoffs höchstenfalls einen Betrag von 22 °C ausmacht, während ein gleichartiges, jedoch schwarz gefärbtes Vlies sich um etwa 39 °C erwärmt.

Das erfindungsgemäße Vlies oder die erfindungsgemäße Folie können wie üblich aus Polyester, Polyethylen oder Polypropylen bestehen. Zweckmäßig wird Polypropylen verwendet, welches UV-stabilisiert ist, um dem stetigen Einfluß dieser Strahlung lange Zeit widerstehen zu können. Die Technologie zur Herstellung der Folie oder des Vlieses ist nicht kritisch und kann nach allen bekannten Maßnahmen erfolgen, sofern eine Folie oder ein Vlies mit einem Flächengewicht von 20 bis 160 g/m² herstellbar ist, in welche Zusatzstoffe eingearbeitet werden können.

Zunächst wird der zu verwendende Polymerrohstoff erweicht, z.B. im Extruder, Kneter oder Mischer, in denen zur hochviskosen Polymermasse das optische Filtermedium, d.h. der entsprechende Pigmentfarbstoff und das reflektierende Additiv, dazugegeben und vermischt werden. Als Weißpigment wird zweckmäßig Titandioxid, Rutiltype, verwendet; in Fällen, wo ein Reflexadditiv gewünscht wird, verwendet man Aluminiumplättchen der Größe 5 »m.

Anschließend wird der Polymerrohstoff nach ebenfalls bekannten und nicht für die Erfindung kritischen Verfahren zu einem Vlies, z.B. einem Spinnvlies oder Krempelvlies, oder zu Folien, z.B. nach den Blasfolien- oder dem Folienextrusionsverfahren, weiterverarbeitet.

Die erfindungswesentliche Pigmentierung des Vliesstoffs oder der Folie mit bei 680 nm und 700 nm absorbierenden Partikeln erfolgt durch die derzeit bekannten Pigmente β-Cu-Phthalocyaninblau oder halogenierten Cu-Phthalocyaningrün.

Die Mengen, in denen diese Pigmente zugegeben werden, können schwanken zwischen 0,01 und 3,0 Gew.-%, bezogen auf das gesamte Flächengewicht des Vlieses bzw. der Folie. Ein Überschreiten dieses Anteils führt zu erhöhten Herstellungskosten, ohne daß sich die Lichtabsorption deutlich steigern ließe. Unterschreitet man den genannten Prozentanteil an Pigmenten, so entsteht eine zu geringe Lichtabsorption. Es gilt bezüglich dieser Überlegungen das Lambert-Beer'sche Gesetz.

In einer besonders bevorzugten Ausführungsform der Erfindung verwendet man einen Vliesstoff oder eine Folie, welche über den gesamten Querschnitt 0,5 Gew.-% disperse Tio₂-Pigmente in Rutilform und mit einer Korngröße von 0,4 »m und 0,8 Gew.-% Cu-Phthalocyaninblau in der β-Form gleichmäßig verteilt enthält. Mit dieser Ausführung ist ein besonders guter Kompromiß zwischen Flächengewicht und Wirksamkeit der Absorption/Reflexion verwirklicht.

Eine weitere vorteilhafte Ausgestaltung der Erfindung besteht darin, daß die Abdeckung zusätzlich zu den Farbpigmenten 2,0 Gew.-% Aluminiumplättchen einer mittleren Größe von 5 »m enthält.

Es sei nochmals betont, daß Vlies- oder Folienherstellung, Einmischen der Zusatzstoffe und Vliesverfestigung nach bekannten Technologien erfolgen können und die Wirksamkeit des erfindungsgemäßen Gegenstandes nicht signifikant beeinflussen.

Im folgenden wird die Erfindung an Beispielen näher verdeutlicht.

### Beispiel 1

Spinnfähiges, isotaktisches Polypropylen, eine "controlled rheology"-Type, wird mit 0,8 Gew.-% feindispersem β-Cu-Phthalocyaninblau in handelsüblicher Masterbatchform (Sanylene Blue PP-2 GLS der Firma SANDOZ AG, Basel) auf Polypropylenträger im Extruder aufgeschmolzen.

Dieser Mischung werden 0,5 Gew.-%, wie der Farbstoff bezogen auf das Flächengewicht, feindisperses Titandioxid, Rutiltype, ebenfalls in Masterbatchform auf Polypropylenträger zugefügt und anschließend aus dieser Schmelze über Spinndüsen daraus Endlosfäden eines Durchmessers von 25 »m versponnen, verstreckt, abgekühlt und aerodynamisch zu einem Vlies gelegt. Das noch nicht verfestigte Vlies wird anschließend über beheizte Kalanderwalzen geführt und punktweise thermisch verfestigt, wobei die Herstellungsparameter so eingestellt werden, daß ein Flächengewicht des Vliesstoffs von 80 g/m² resultiert.

Der Vliesstoff kann als Rollenware gelagert werden. Bei einer Auslegedauer des Vliesstoffs über Frisee-Salat von 7 Tagen erfolgt vollständige Bleichung der Pflanze. Ihr Wachstum wird nicht beeinträchtigt, die Vliesstofftemperatur-Erhöhung bei täglicher Sonneneinstrahlung überschreitet nicht den Wert von 22 °C.

### Beispiel 2

Analog Beispiel 1 wird ein photoselektives Vlies hergestellt, lediglich mit dem Unterschied, daß als Farbpigment (in gleicher Menge und Korngröße wie in Beispiel 1) Cu-Phthalocyaningrün verwendet wird (Handelsbezeichnung der Firma SANDOZ AG, Basel, Sanylene Green PP-2 GLS). Eigenschaften und Wirkungsweise des Vliesstoffs sind gleich denen im ersten Beispiel.

## Patentansprüche

1. Die Verwendung eines photoselektiven Vliesstoffs oder einer ebensolchen Folie aus Polyester, Polyethylen oder Polypropylen mit einem Flächengewicht von 20 bis 160 g/m² als Bodenabdeckung zum Bleichen von lebenden Pflanzen dadurch gekennzeichnet, daß der Vliesstoff bzw. die Folie mit 0,01 g/m² bis 4,0 g/m² TiO₂-Partikeln oder Aluminiumplättchen und mit 0,01 g/m² bis 3,0 g/m² β-Cu-Phtalocyaninblau oder halogeniertem Cu-Phtalocyaningrün, die selektiv Wellenlängen von 680 nm und von 700 nm absorbieren, ausgerüstet ist zum überhitzungsfreien Bleichen von lebenden Pflanzen.

2. Vliesstoff oder Folie aus Polyester, Polyethylen oder Polypropylen mit einem Flächengewicht von 20 bis 160 g/m² zur Verwendung nach Anspruch 1, dadurch gekennzeichnet, daß über den gesamten Querschnitt fein verteilt 0,5 Gew.-% disperse TiO₂-Partikeln mit einer Korngröße von 0,4 »m und 0,8 Gew.-% β-Cu-Phthalocyaninblau oder halogeniertes Cu-Phthalocyaningrün mit einer Korngröße von 0,4 »m enthalten sind.

3. Vliesstoff oder Folie aus Polyester, Polyethylen oder Polypropylen mit einem Flächengewicht von 20 bis 160 g/m² zur Verwendung nach Anspruch 1, dadurch gekennzeichnet, daß als lichtreflektierende Partikeln 2,0 Gew.-% Aluminiumplättchen einer mittleren Größe von 5 »m und 0,8 Gew.-% β-Cu-Phthalocyaninblau mit einer Korngröße von 0,4 »m enthalten sind.

4. Folie nach Anspruch 2, 3, oder 4, dadurch gekennzeichnet, daß sie eine Dicke von 40 »m besitzt.

## Claims

1. The use of a photoselective nonwoven material or a photoselective sheeting made from polyester, polyethylene or polypropylene and having a weight per unit area of from 20 to 160 g/m² as ground covering for blanching living plants, characterized in that the nonwoven material or the sheeting contains from 0.01 g/m² to 4.0 g/m² of TiO₂ particles or aluminium flakes and from 0.01 g/m² to 3.0 g/m² of β-copper phthalocyanine blue or halogenated copper phthalocyanine green, which selectively absorb wavelengths of 680 nm and 700 nm, for blanching of living plants without overheating.

2. A nonwoven material or sheeting made from polyester, polyethylene or polypropylene and having a weight per unit area of from 20 to 160 g/m² for the use according to claim 1, characterized in that 0.5% by weight of disperse TiO₂ particles having a particle size of 0.4 »m and 0.8% by weight of β-copper phthalocyanine blue or halogenated copper phthalocyanine green having a particle size of 0.4 »m are present finely distributed over the entire cross-section.

3. A nonwoven material or sheeting made from polyester, polyethylene or polypropylene and having a weight per unit area of from 20 to 160 g/m² for the use according to claim 1, characterized in that it contains 2.0% by weight of aluminium flakes having an average size of 5 »m and 0.8% by weight of β-copper phthalocyanine blue having a particle size of 0.4 »m as light-reflecting particles.

4. Sheeting according to claim 2 or 3 characterised in that it has a thickness of 40 »m.

## Revendications

1. Utilisation d'une matière photo-sélective en nappe ou en feuille formée de polyester, de polyéthylène ou de polypropylène et ayant un poids par unité de surface de 20 à 160 g/m² comme recouvrement de sol en vue du blanchiment de plantes vives, caractérisée en ce que la nappe ou la feuille est pourvue de 0,01 g/m² à 4,0 g/m² de particules de TiO₂ ou de paillettes d'aluminium et de 0,01 g/m² à 3,0 g/m² de bleu phtalocyanine β-Cu ou de vert phtalocyanine-Cu halogéné, qui absorbent sélectivement des longueurs d'ondes de 680 nm et 700 nm en vue d'un blanchiment, exempt de surchauffe, de plantes vives.

2. Nappe ou feuille de polyester, de polyéthylène ou de polypropylène, d'un poids par unité de surface de 20 à 160 g/m² pour une utilisation conforme à la revendication 1, caractérisée en ce que dans toute la section sont finement répartis 0,5 % en poids de particules de TiO₂ dispersées et, d'une grosseur de grains de 0,4 »m, et 0,8 % en poids de bleu phtalocyanine β-Cu ou de vert phtalocyanine-Cu halogéné, d'une grosseur de grains de 0,4 »m.

3. Nappe ou feuille en polyester, polyéthylène ou polypropylène, d'un poids par unité de surface de 20 à 160 g/m² pour une utilisation conforme à la revendication 1, caractérisée en ce qu'elle contient comme particules réfléchissant la lumière 2,0 % en poids de paillettes d'aluminium d'une taille moyenne de 5 »m et 0,8 % en poids de bleu phtalocyanine β-Cu d'une grosseur de grains de 0,4 »m.

4. Feuille selon la revendication 2, 3 ou 4, caractérisé en ce qu'elle a une épaisseur de 40 »m.
